Europäisches Patentamt

European Patent Office

Office européen des brevets

(11) Veröffentlichungsnummer: **0 177 517**
**B1**

(12) **EUROPÄISCHE PATENTSCHRIFT**

(45) Veröffentlichungstag der Patentschrift:
22.07.87

(51) Int. Cl.⁴: **B 05 D 1/00,** B 05 D 7/24, C 09 D 3/00, G 02 B 1/10

(21) Anmeldenummer: 85901360.9

(22) Anmeldetag: 12.03.85

(86) Internationale Anmeldenummer:
PCT/DE 85/00079

(87) Internationale Veröffentlichungsnummer:
WO 85/04601 (24.10.85 Gazette 85/23)

(54) VERFAHREN ZUM AUFBRINGEN EINER DÜNNEN, TRANSPARENTEN SCHICHT AUF DER OBERFLÄCHE OPTISCHER ELEMENTE.

(30) Priorität: 06.04.84 DE 3413019

(43) Veröffentlichungstag der Anmeldung:
16.04.86 Patentblatt 86/16

(45) Bekanntmachung des Hinweises auf die Patenterteilung:
22.07.87 Patentblatt 87/30

(84) Benannte Vertragsstaaten:
AT CH DE FR GB LI SE

(56) Entgegenhaltungen:
FR-A-2 332 313

Journal of Applied Polymer Science, Band 27, Dezember 1982, New York (US); K.S. Chen et al: "Preliminary Experiment of Surface Hardening of Polymers by Glow Discharge Polymerization", Seiten 4655-4660

(73) Patentinhaber: ROBERT BOSCH GMBH, Postfach 50, D-7000 Stuttgart 1 (DE)

(72) Erfinder: BENZ, Gerhard, Brucknerstr. 8, D-7030 Böblingen (DE)
Erfinder: MUTSCHLER, Gerda, Max- Eyth- Str. 2, D-7016 Gerlingen (DE)
Erfinder: SCHNEIDER, Günter, Tübinger Str. 173, D-7146 Tamm (DE)

## Beschreibung

### Stand der Technik

Die Erfindung geht aus von einem Verfahren nach der Gattung des Hauptanspruchs. Ein Verfahren dieser Art ist z. B. aus FR-A-2 332 313 bekannt. Transparente Kunststoffelemente, auf die besonders Bezug genommen ist, können bei geringerem Fertigungsaufwand mit weitaus höherer optischer Präzision geformt werden als entsprechende Glaselemente. So ist es beispielsweise möglich, Kunststofflinsen für einfache Objektive oder für Brillen sehr wirtschaftlich in einem Spritzverfahren herzustellen, wobei die bei Glaslinsen notwendige Nachbearbeitung durch Schleifen und Läppen entfällt. Ein weiterer Vorteil besteht darin, daß komplexere Formen mit integrierten Zusatzfunktionen herstellbar sind. Beispielsweise kann die Abdeckung für den Hauptscheinwerfer und die Blinkleuchte eines Kraftfahrzeuges aus einem Stück gefertigt werden. Nachteilig bei allen Kunststoffen ist, daß das weiche, duktile Material einem sehr großen Schnittverschleiß unterliegt, worunter insbesondere die Erosion durch Beanspruchungen mit überwiegender Tangentialkomponente, wie z.B. Abwischen, zu verstehen ist. Deshalb muß die Oberfläche durch eine gut haftende, ausreichend harte Deckschicht geschützt werden, die zusätzlich den üblichen Klimaprüfungen (Gitterschnitt und Abriß eines Normklebebandes vor und nach der Feuchtraumprüfung nach SK (Schwitzwasser-Konstantklima) DIN 50017, Temperaturwechsel etc.) standhält.

Für den Oberflächenschutz werden überwiegend Lackierungen mit diversen Lacksystemen durchgeführt, wobei hauptsächlich Acryllacke und Polyorganosiloxan-Lacke verwendet werden. Dabei bieten die Polyorganosiloxan-Lacke im relativen Vergleich den besten Abriebschutz. Die Prüfung auf Abriebbeständigkeit kann z.B. nach einem ECE-Vorschlag (Econommic Comission for Europe) folgendermaßen durchgeführt werden:

Ein mit einem Tuch umwickelter Stempel von 14 x 14 mm Größe reibt mit einem Anpreßdruck von 2 N/cm² bei einer Maximalgeschwindigkeit von 3 cm/sec über die Beschichtung. Zwischen dem Stempel und der Prüffläche befindet sich Quarzpulver der Mohs-Härte 7, Korngröße 0 bis 200 μm in annähernder Normalverteilung und einem Eckigkeitsverhältnis von 1,8 bis 2,0. Nach 50 Doppelhüben wird in Transmission das Streulicht in einem Raumwinkel von 1° bis 12° gemessen. Als maximaler oberer Grenzwert ist in dem ECE-Normvorschlag ein Streulichtwert von 4 % vorgesehen. Nach dieser Prüfung haben die Acryllacke jedoch Streulichtwerte von mehr als 5 % und die besten Polyorganosiloxan-Lacke von nur wenig kleiner als 4 %.

Harte Schichten lassen sich auch mit PVD- und CVD-Verfahren herstellen (Physical Vapour Deposition bzw. Chemical Vapour Deposition).

Die CVD-Verfahren setzen jedoch relativ hohe Prozeßtemperaturen voraus. Auch bei plasmaunterstützten CVD-Verfahren ist in der Regel die notwendige Prozeßtemperatur selbst für Polycarbonatteile noch zu hoch. Außerdem werden in solchen CVD-Reaktionen recht spröde, anorganische Deckschichten, wie SiO₂ oder SiC erzeugt, die auf der organischen Unterlage nicht sehr gut haften und somit bei der Abriebprüfung häufig abplatzen. Dasselbe Problem hat man auch bei im Hochvakuum aufgedampften Quarzschichten (PVD-Verfahren). Die Härte solcher Schichten ist sehr gut. Nach der vorstehend angegebenen ECE-Abriebprüfung lassen sich Streulichtwerte von kleiner als 1 % realisieren. Jedoch ist auch bei diesen Schichten die Haftung auf Polycarbonat nach Temperaturwechsel bzw. Temperaturlagerung sehr schlecht.

Es ist weiterhin bekannt, daß sich auch durch Glimmpolymerverfahren Schutzschichten herstellen lassen. Als Ausgangsmonomere werden verschiedene Silane, Siloxane und Silazane verwendet. Die in einer Glimmentladung aus diesen siliziumorganischen Verbindungen abgeschiedenen Polymerfilme sind jedoch ohne zusätzliche Maßnahmen noch relativ weich und bieten keinen nennenswerten Abriebschutz. Die Schichthärte nimmt jedoch zu, wenn die Zahl der in dem Polymerfilm vorhandenen Silizium-Sauerstoff-Silizium-Bindungen erhöht wird. Dies kann gemäß "Polymer Sci" (USSR) 9, 2281 (1967) z.B. durch Zugabe von Argon-Inertgas in eine Glimmentladung, die in einem Siloxan-Monomerdampf brennt, erreicht werden, wobei als Monomer Hexamethyldisiloxan (HMDS) verwendet wird.

In "NASA Tech Briefs", Winter 1978, p. 543 wird ein ähnliches Verfahren zur Herstellung kratzfester Beschichtungen auf Linsen aus PMMA angegeben. Dabei wird nach den Angaben des Autors in einem ersten Schritt durch Behandlung in einem Wasserdampf-Plasma durch Bildung von Hydroxyl-Gruppen auf der Kunststoffoberfläche eine haftfeste Unterlage erzeugt. In einem zweiten Schritt wird der eigentliche Polymerfilm aus einem siliziumorganischen Monomer (im Beispiel gleiche Teile Vinyldimethyläthoxysilan und Hexamethyldisilazan) aufgebracht. Der in dem diskutierten Zusammenhang wichtigste dritte Schritt ist die Nachbehandlung in einem Argonplasma. Dadurch wird nach Aussage des Autors die Vernetzung des Polymerfilms verbessert und dessen Kratzfestigkeit erhöht.

Die DE-AS 26 25 448 beschreibt ein Verfahren zur Herstellung lyophiler Schutzschichten auf der Oberfläche optischer Reflektoren. Die Lyophilierung des aus dem siliziumorganischen Monomer Hexamethyldisiloxan (HMDS) gebildeten Polymerfilms wird durch eine Nachbehandlung in einem Sauerstoffplasma erreicht. Dadurch werden in oberflächennahen Bereichen des Polymerfilms vermehrt Silizium-Sauerstoff-Silizium-Bindungen erzeugt. Die so erreichte Vergrößerung der Grenzflächenspannung sollte gleichzeitig eine Verbesserung der Kratzfestigkeit bewirken. Dies wurde in einer in "Applied Optics" 16, 717 (1977) veröffentlichten Arbeit festgestellt, wo durch Nachbehandlung eines aus einem siliziumorganischen Monomer (Vinyltrimethoxysilan) hergestellten Polymerfilms in einem Sauerstoffplasma eine gewisse Verbesserung der Abriebbeständigkeit erreicht wurde. Die damit erzielte Schutzwirkung für eine Polycarbonatoberfläche reicht jedoch nicht aus, um die eingangs genannte ECE-Prüfung zu bestehen. Eigene Untersuchungen haben ergeben, daß die Beständigkeit gegen Zerkratzen von in Sauerstoff nachgeglimmten HMDS-Schichten bei der ECE-Prüfung sogar deutlich schlechter ist als diejenige von unbehandelten Schichten entsprechender Schichtdicke.

In "Solar Energy Materials" 3, 301 (1980) wird zur Verbesserung der Kratzfestigkeit vorgeschlagen, während der Abscheidung des Polymerfilms einen gewissen Anteil von Sauerstoff in den Monomerdampf einzulassen. Der Sauerstoffpartialdruck ist dabei kleiner als der Partialdruck des monomeren Dampfes. Entsprechend dem publizierten Infrarotspektrum nimmt dadurch, ebenso wie bei den bereits diskutierten Verfahren, die Zahl der Silizium-Sauerstoff-Silizium-Bindungen zu und damit auch die Schichthärte. Trotz Sauerstoffzugabe blieb jedoch die Konzentration der Methylgruppen, die dem Polymerfilm einen organischen, weichen Charakter geben, praktisch unverändert. Auch ist die in der Arbeit benutzte Sandfall-Abriebmethode nach ASTM D 968-51 eine weniger scharfe Prüfmethode als der eingangs beschriebene ECE-Abriebtest. In der Arbeit wurden ferner als Trägersubstrate für die aufzubringende Schicht lediglich Glasträger benutzt, so daß das Problem der Schichthaftung auf einem Kunststoffsubstrat überhaupt nicht zu beachten war.

## Vorteile der Erfindung

Es hat sich gezeigt, daß eine nach dem im Kennzeichen des Hauptanspruchs angegebenen Verfahren hergestellte Schicht nicht nur chemischen und thermischen Einflüssen dauerhaft standhält, sondern auch eine gute Abrieb- und Kratzfestigkeit aufweist. Sie bietet dadurch einen optimalen Schutz für die Oberfläche von optischen Elementen, insbesondere von Kunststoffelementen. Der Prozeß wird so geführt, daß auf der Oberfläche eine weiche, kunststoffähnliche Polymerschicht aus dem monomeren Dampf organischer Verbindungen abgeschieden wird, die ein gutes Haftvermögen auf der Unterlage besitzt. Während des Schichtwachstums wird dem monomeren Dampf eine die Schichthärte erhöhende Substanz, beispielsweise Sauerstoff, in bestimmter Menge und über eine bestimmte Zeit zugegeben, wodurch die zunächst organische Polymerschicht (Haftschicht) einen immer anorganischeren, quarzähnlichen Charakter annimmt. Die auf diese Weise erzeugte Deckschicht ist äußerst hart und sehr kratzbeständig. Neben dem bevorzugt verwendeten Hexamethyldisiloxan können auch andere, methyl-, vinyl-, phenyl- oder alkoxygruppenhaltige Siloxane, Silazane oder Silane für die Bildung der Schutzschicht benutzt werden.

Durch die in den Unteransprüchen aufgeführten Maßnahmen sind vorteilhafte Weiterbildungen und Verbesserungen des im Hauptanspruch angegebenen Verfahrens möglich. Die Beschaffenheit der Schutzschicht läßt sich durch die Menge der während des Schichtwachstums zugeführten härteerhöhenden Substanzen beliebig variieren. So ergibt sich eine besonders harte Deckschicht unter Zugabe von Sauerstoff dadurch, daß der Sauerstoffpartialdruck während 5 bis 20 % der Gesamtabscheidedauer stetig erhöht und bei einem Arbeitsdruck von $5 \times 10^{-2}$ mbar bis 1 mbar das Durchflußverhältnis von Sauerstoff und Monomer bis auf Werte zwischen 3 : 1 und 20 : 1, insbesondere zwischen 8 : 1 und 16 : 1, gesteigert wird.

## Zeichnung

Das erfindungsgemäße Verfahren wird nachstehend anhand von Abbildungen erläutert. Es zeigen

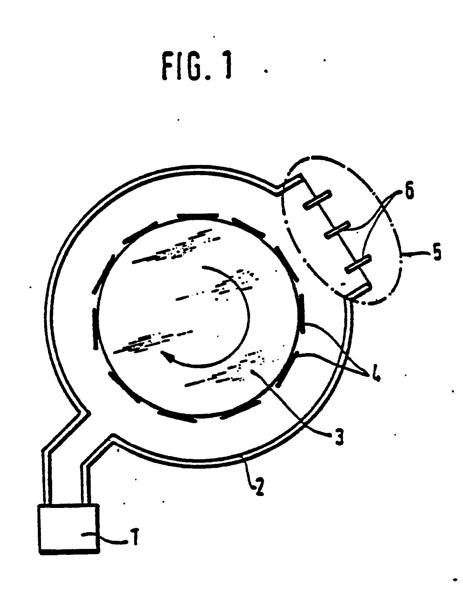

Figur 1 einen Querschnitt durch eine schematisch dargestellte Vorrichtung zur Erzeugung der neuen Schutzschicht,

Figur 2 das Infrarotspektrum einer HMDS-Glimmpolymerschicht,

Figur 3 das Infrarotspektrum einer HMDS-Schicht in Sauerstoffplasma,

Figur 4 einen Vergleich der Infrarotabsorptionsbanden von vier unterschiedlich hergestellten Proben,

Figur 5 ein Diagramm der Streulichtzunahme nach ECE-Abriebprüfung.

## Beschreibung des Ausführungsbeispiels

In einem durch einen Pumpstand 1 evakuierbaren Vakuumrezipienten 2 befindet sich eine um ihre Achse drehbare Trommel 3, auf deren Umfangsfläche die zu beschichtenden Kunststoffteile 4 angebracht sind. Die Beschichtungsteile 4 passieren zeitlich hintereinander eine Beschichtungseinheit 5, die bevorzugt an der Außenseite des Vakuumrezipienten 2 angebracht ist. Die Beschichtungseinheit kann jedoch auch im Innern des Rezipienten 2 untergebracht sein. Die Beschichtungseinheit 5 besteht aus einer Vielzahl von Einzeldüsen 6, in die die Reaktionsgase eingeleitet werden und welche entlang einer Mantellinie innerhalb eines Umfangssektors des Rezipienten 2 angebracht sind.

Durch die Düsen 6 werden die verwendeten Reaktionsgase, nämlich ein siliziumorganisches Monomer (methyl-, vinylphenyl- oder alkoxygruppenhaltige Silane, Siloxane oder Silazane), bevorzugt jedoch HMDS, und ein Zusatzgas, insbesondere Sauerstoff, in den Rezipienten 2 eingeleitet. Durch eine von außen angelegte Hochspannung wird in an sich bekannter Weise in dem ausströmenden Monomerdampf bzw. dem Zusatzgas eine Glimmentladung gezündet. Dadurch werden hoch angeregte Ionen, Radikale und Molekülbruchstücke erzeugt, die auf das in einigen Zentimetern Abstand befindliche Beschichtungsgut auftreffen und dort zu einer Schutzbeschichtung aufwachsen. Dabei wird zunächst ein rein organischer, ohne Zusatzgase, wie Sauerstoff, hergestellter Polymerfilm abgeschieden, um eine möglichst gute Haftung der Schutzbeschichtung auf dem Beschichtungsgut, das ein Kunststoffsubstrat, wie PC oder PMMA sein kann, zu erreichen.

Bei der Prozeßführung ist es wichtig, daß vor der Abscheidung des Polymerfilms die Substratoberfläche aus PC oder PMMA nicht einer Glimmreinigung in einem sauerstoffhaltigen Plasma unterzogen wird, weil dadurch die Schichthaftung eines nachfolgend aufgebrachten HMDS-Glimmpolymerfilms drastisch verschlechtert würde.

Dies wird durch folgende Beispiele verdeutlicht:

a) PC-Substrat. Keine Glimmreinigung. Polymerschichtdicke 6,5 μm. Haftung des Polymerfilms nach 240 Stunden Lagerung in Tropenklima nach SK DIN 50017 (40°C, 100 % relative Feuchte) oder nach 10 Temperaturwechseln zwischen –40°C und + 130°C und anschließendem Gitterschnitt 100 Prozent.

b) PC-Substrat. 1 Minute Glimmreinigung in Sauerstoffplasma. Polymerschichtdicke 7,5 μm. Abplatzen der Schicht bei leichtem Durchbiegen des Substrats.

c) PC-Substrat. 1,5 Minuten Glimmreinigung in Sauerstoffplasma. Polymerschichtdicke 7 μm. Spontanes Abplatzen der Schicht bei der Berührung mit einer Nadel.

d) PC-Substrat. Glimmreinigung 0,5 Minuten in Sauerstoffplasma und anschließend 1 Minute in Argonplasma. Polymerschichtdicke 8,1 μm. Abplatzen der Beschichtung bei der Prüfung der Kratzbeständigkeit nach der eingangs angegebenen ECE-Prüfung.

Bei der Glimmpolymerisation von reinem HMDS mit der Summenformel $C_6H_{18}Si_2O$ entsteht auf der Kunststoffoberfläche ein Polymerfilm mit der allgemeinen Summenformel $(C\alpha H\beta Si\gamma O\delta)$. Dieser Polyorganosiloxanfilm ist lyophob und relativ weich, haftet wegen seines organischen Charakters aber sehr gut auf der Kunststoffunterlage. Bereits nach der Ausbildung eines nur wenige 100 Nanometer dicken, reinen HMDS-Glimmpolymerfilmes kann in die Glimmentladung Sauerstoff ($O_2$) zugegeben werden. Der Sauerstoffpartialdruck wird während etwa 5 bis 20 % der Gesamtabscheidedauer stetig erhöht. Dabei wird bei einem Arbeitsdruck von $5 \times 10^{-2}$ mbar bis 1 mbar das Verhältnis der Gasflüsse von $O_2$ und HMDS bis auf etwa 10 : 1 gesteigert. Dadurch werden in der Glimmpolymerschicht die organischen Methylgruppen durch Sauerstoff ersetzt. In der obigen Summenformel werden somit die Indices $\alpha$ und $\beta$ stetig verringert, bis in einer sehr sauerstoffreichen Glimmentladung aus den HMDS eine $SiO_x$-artige Schicht entsteht ($\alpha$, $\beta$ = 0). Diese anorganische, quarzähnliche Schicht ist äußerst hart und sehr kratzbeständig.

**Beispiel**

Gesamtabscheidedauer 10 Minuten; Gesamtschichtdicke 7 μm. Die Abscheidung beginnt mit reinem HMDS-Gas bei einem Durchfluß von 50 cm³/min. über eine Zeit von 0,5 Minuten. Danach wird innerhalb von 1 Minute linear zunehmend vom Durchfluß 0 cm³/min. bis auf den Durchfluß von 500 cm³/min. $O_2$-Gas zusätzlich in die Glimmentladung eingeleitet. Dieses Durchflußverhältnis von $O_2$/HMDS = 10 : 1 wird über die restliche Abscheidedauer von 8,5 Minuten konstant gehalten.

Die entscheidenden Schritte an dem Verfahren sind somit, daß zunächst eine organische, weiche, aber gut haftende Polyorganosiloxanschicht abgeschieden wird, die im Trennfall nur einige Nanometer dick zu sein braucht (Haftschicht). Die Schichthärte wird innerhalb von einigen hundert Nanometern bis einigen Mikrometern durch Zugabe von $O_2$ bis zu einem sehr deutlichen $O_2$-Überschuß sehr stark erhöht und über das restliche Schichtprofil bis zur gewünschten Gesamtschichtdicke konstant gehalten (Deckschicht).

Durch den so erzielten stufenlosen Übergang innerhalb einer einstellbaren Schichtdicke von einem organischen Polymer zu einer anorganischen, harten Deckschicht wird eine sehr gute Haftung auf der Unterlage bei gleichzeitiger großer Oberflächenhärte erreicht.

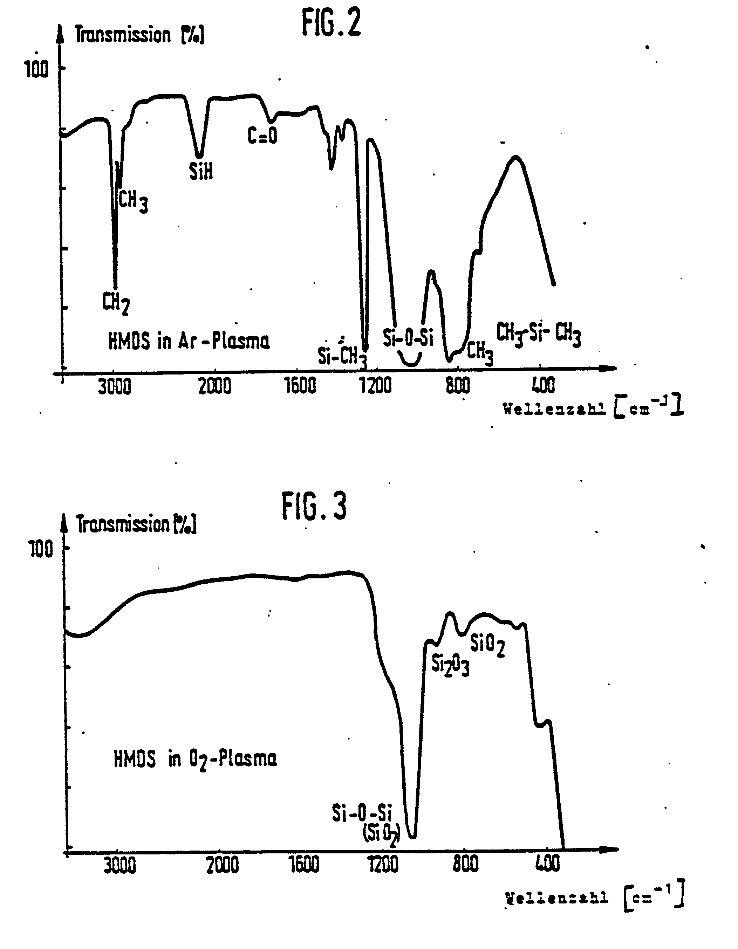

Zur Verdeutlichung der beschriebenen Schichteigenschaften zeigen die Figuren 2 und 3 die Analyse im Infrarotspektrometer von zwei unterschiedlich hergestellten HMDS-Glimmpolymerschichten auf Kochsalz-Substraten. Die in den Figuren eingetragene Zuordnung der einzelnen Absorptionslinien zu den verschiedenen funktionellen Gruppen in dem Polymerfilm kann in der einschlägigen Literatur nachgelesen werden. In Figur 2 wurde eine reine HMDS-Glimmpolymerschicht abgeschieden mit den Eigenschaften, die vorstehend für die Haftschicht angegeben sind. Zur Stabilisierung der Glimmentladung wurde Argon-Inertgas zusätzlich in den Monomerdampf eingeleitet. Dies hat jedoch auf die chemische Zusammensetzung des Polymerfilms keinen nennenswerten Einfluß. Die Absorptionen bei 2960 cm$^{-1}$ (CH$_2$), 2910 cm$^{-1}$ (CH$_3$) und 1245 cm$^{-1}$ (Si-CH$_3$) zeigen, daß ein polymerer Organosiloxanfilm abgeschieden wurde. Im Gegensatz hierzu sind in Figur 3 die scharfen Absorptionslinien, die durch die Methylgruppen verursacht werden, verschwunden. Dafür ist insbesondere die Absorption bei etwa 1050 cm$^{-1}$, die durch eine Silizium-Sauerstoff-Silizium-Streckschwingung verursacht wird, stark ausgeprägt. In Figur 3 wurde mit einem Durchflußverhältnis von O$_2$ zu HMDS von größer als 6 : 1 gearbeitet. Zusätzlich wurde Argon-Inertgas zur Stabilisierung der Glimmentladung verwendet. Die chemische Zusammensetzung der Schicht nach Figur 3 entspricht somit der Deckschicht der beschriebenen, kratzfesten Beschichtung.

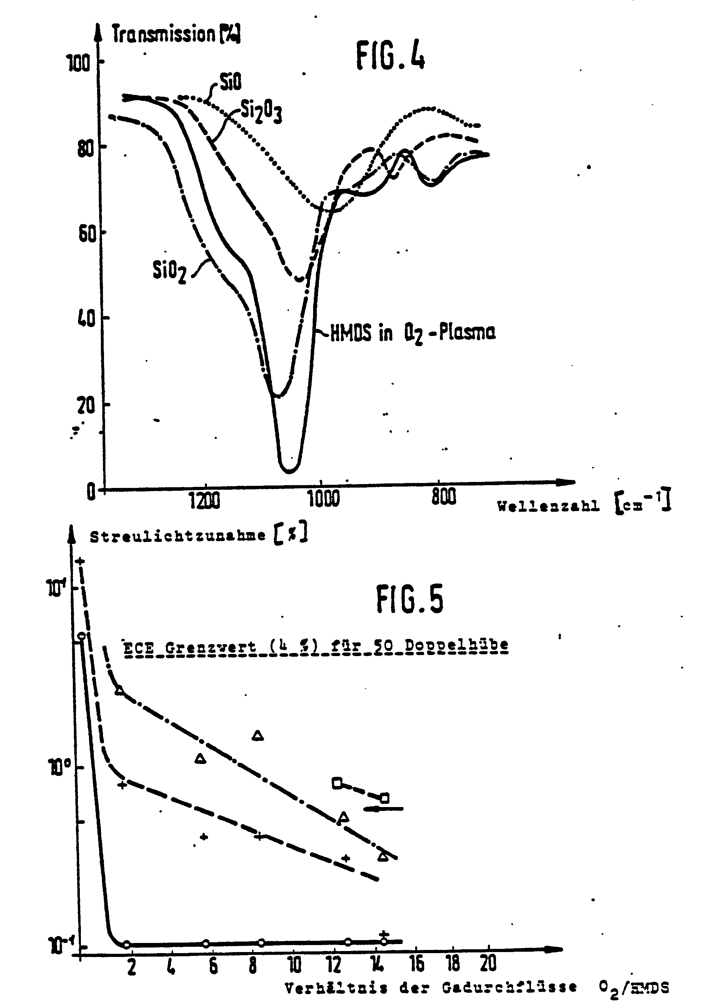

Zur weiteren Veranschaulichung zeigt Figur 4 einen Vergleich der Infrarotabsorptionsbanden im Bereich der Silizium-Sauerstoff-Silizium-Streckschwingung von vier unterschiedlich hergestellten Proben. Das sind drei aufgedampfte Schichten von SiO, Si$_2$O$_3$ und von SiO$_2$ und dazu im Vergleich die mit Sauerstoffüberschuß hergestellte HMDS-Glimmpolymerschicht von Figur 3. Das Diagramm verdeutlicht, daß die Deckschicht der kratzfesten Beschichtung auf Kunststoffoberflächen praktisch aus SiO$_x$ besteht, mit $1,5 < x < 2$.

Die Zerkratzungsbeständigkeit der Schutzbeschichtung kann durch das Verhältnis der Gasflüsse von O$_2$ und HMDS während der Abscheidung der Deckschicht in weiten Grenzen beeinflußt werden. Figur 5 zeigt in logarithmischem Maßstab die Streulichtzunahme von mit einer ca. 6 μm dicken Schutzschicht überzogenen PC-Proben nach einem Abrieb gemäß der ECE-Prüfung. Dabei wurde das Verhältnis der Gasflüsse von O$_2$ und HMDS bei einem Arbeitsdruck von ca. $3 \times 10^{-1}$ mbar zwischen 0 : 1 und etwa 15 : 1 variiert und die Streulichtzunahme, bezogen auf eine unzerkratzte Probe, nach 50, 100, 200 und 500 Doppelhüben des Abriebstempels gemäß der ECE-Prüfung gemessen. Nach jeweils 50 Doppelhüben wurde das benützte Quarzmehl erneuert.

Figur 5 zeigt, daß ohne Sauerstoffanteil im HMDS-Plasma der Streulichtwert nach 50 Doppelhüben mit den gemessenen 5,5 % oberhalb des in dem ECE-Vorschlag angegebenen maximalen Grenzwertes von 4 % liegt. Bei in O$_2$ nachgeglimmten Proben liegt der Streulichtwert bei über 7 %. Bereits bei einem Verhältnis der Gasflüsse von O$_2$ zu HMDS von 2 : 1 liegt die Streulichtzunahme jedoch im Bereich von 0,1 % und somit weit unterhalb des ECE-Grenzwertes von 4 % bei 50 Doppelhüben (O-

Symbole in Figur 5 und ausgezogene Kurve). Insbesondere die Meßkurven nach 100 bzw. nach 200 Doppelhüben zeigen, daß mit zunehmenden Verhältnis der Gasflüsse von O$_2$ zu HMDS die Streulichtwerte weiter abnehmen, d.h. die Abriebbeständigkeit der Schutzschicht weiter zunimmt (+-Symbole und gestrichelte Kurve bzw. $\Delta$ -Symbole und strichpunktierte Kurve). Die Meßpunkte bei 500 Doppelhüben (■ -Symbole) ergeben bei einem O$_2$: HMDS Gasflußverhältnis von 14:1 lediglich eine Streulichtzunahme von 0,7 bis 0,8 %. Eine gleichartig geprüfte Weichglasprobe hat mit 0,6 % Streulichtzunahme (Pfeil-Symbol in Figur 5) eine vergleichbare Zerkratzungsempfindlichkeit wie die so beschichteten PC-Platten. Dieses Ergebnis demonstriert den sehr guten Zerkratzungsschutz, welcher durch das beschriebene Verfahren erhalten wird.

Neben der eingehend beschriebenen Reaktion von siliziumorganischen Monomeren mit Sauerstoff, die letztlich zur Bildung harter SiO$_x$ -Deckschichten führt, können zur Erzielung einer weiteren Steigerung der Schichthärte bei entsprechend temperaturbeständigen Substraten auch SiC-artige bzw. Si$_3$N$_4$-artige Deckschichten gebildet werden, indem bei Bedarf zusätzlich zu dem Sauerstoffgasfluß oder anstelle desselben reine Kohlenwasserstoffe bzw. Stickstoff oder stickstoffhaltige Verbindungen, bevorzugt N$_2$ und NH$_3$, in die Reaktion eingeleitet werden. Als Kohlenwasserstoffe eignen sich insbesondere die niedermolekularen Verbindungen der Alkane (z.B. Methan, Äthan, etc.) der Olefine (Äthylen) oder der Alkine (z.B. Acetylen).

Das vorgeschlagene Verfahren hat nicht nur Bedeutung für die Herstellung von Schutzschichten auf der Oberfläche von optischen Kunststoffelementen. Vielmehr können auch optische Glaselemente auf diese Art beschichtet und somit vergütet werden. Außerdem eignet sich das vorgeschlagene Verfahren zum Herstellen einer Schutzschicht auf der Oberfläche von Reflektoren, vorzugsweise aluminiumbedampfter Reflektoren. Dabei tritt infolge der Zugabe von Sauerstoff während der Polymerisation unter anderem der in der DE-AS 26 25 448 beschriebene Effekt ein, d.h., das ursprünglich lyophobe Monomer der Schicht wird durch die Sauerstoffbehandlung lyophiliert und erhält dadurch die in der erwähnten Veröffentlichung genannten Eigenschaften. Da die Sauerstoffbehandlung nicht erst einsetzt, wenn die Schicht fertig aufgetragen ist, sondern schon vorher während der Polymerisation beginnt, ist die Lyophilierung erheblich nachhaltiger und dauerhafter, da sie auch tieferliegende Bereiche der Schutzschicht erfaßt. Es hat sich nämlich gezeigt, daß die durch eine Nachbehandlung mit Sauerstoff erzeugten lyophilen Eigenschaften der Schicht mehr und mehr verschwinden, wenn die offenen, beschichteten Reflektoren längere Zeit gelagert werden. Eine nach dem vorgeschlagenen Verfahren hergestellte Schutzschicht ist hinsichtlich ihrer lyophilen Eigenschaft wesentlich beständiger und zeigt auch nach verhältnismäßig langer Lagerzeit der Reflektoren noch keine Wirkungseinbuße.

**Patentansprüche**

1. Verfahren zum Aufbringen einer dünnen, transparenten Schicht auf die Oberfläche optischer Elemente in einem Vakuumrezipienten, insbesondere auf die Oberfläche transparenter Kunststoffelemente, zum Schutz gegen mechanische und chemische Einflüsse, bei welchem die Oberfläche einem monomeren Dampf organischer Verbindungen, vorzugsweise einer siliziumorganischen Substanz, ausgesetzt und die Schutzschicht durch Polymerisation aus der Dampfphase mit Hilfe der Strahlung aus einer elektrischen Gasentladung abgeschieden wird, wobei dem monomeren Dampf während des Wachstums der Polymerschicht die Schichthärte erhöhende Substanzen zugegeben werden, dadurch gekennzeichnet, daß die Zugabe der die Schichthärte erhöhenden Substanzen gegenüber dem Beginn des Polymerisationsprozesses verzögert erfolgt.

2. Verfahren nach Anspruch 1, dadurch gekennzeichnet, daß während des Polymerisationsprozesses die die Schichthärte erhöhenden Substanzen in steigender Menge zugegeben werden.

3. Verfahren nach Anspruch 2, dadurch gekennzeichnet, daß die Zufuhr der die Schichthärte erhöhenden Substanzen kontinuierlich gesteigert wird.

4. Verfahren nach Anspruch 1, dadurch gekennzeichnet, daß die Zugabe der die Schichthärte erhöhenden Substanzen nach einer vorgegebenen Zeit ab Beginn der Polymerisation in der ersten Hälfte des Schichtwachstums einsetzt und die Menge der zugegebenen Substanzen bis zum Ende des Schichtwachstums auf ein Mehrfaches der Menge des monomeren Dampfes gesteigert wird.

5. Verfahren nach Anspruch 1, dadurch gekennzeichnet, daß als die Schichthärte erhöhende Substanz Sauerstoff verwendet wird.

6. Verfahren nach Anspruch 5, dadurch gekennzeichnet, daß der Sauerstoffpartialdruck während 5 bis 20 % der Gesamtabscheidedauer stetig erhöht und bei einem Arbeitsdruck von 5 x $10^{-2}$ mbar bis 1 mbar das Durchflußverhältnis von Sauerstoff und Monomer bis auf Werte zwischen 3 : 1 und 20 : 1, insbesondere zwischen 8 : 1 und 16 : 1, gesteigert wird.

7. Verfahren nach Anspruch 5, dadurch gekennzeichnet, daß die Sauerstoffzugabe nach maximal 10 % der Gesamtabscheidedauer einsetzt und innerhalb maximal 30 % der Gesamtabscheidedauer linear zunehmend auf einen vorgegebenen Wert gesteigert wird, der über die restliche Abscheidedauer konstant bleibt.

8. Verfahren nach Anspruch 1, dadurch gekennzeichnet, daß als die Schichthärte erhöhende Substanz Kohlenwasserstoffe (niedermolekulare Alkane, Alkene oder Alkine), insbesondere Methan und Acetylen, verwendet werden.

9. Verfahren nach Anspruch 1, dadurch gekennzeichnet, daß als die Schichthärte erhöhende Substanz Stickstoff oder stickstoffhaltige Verbindungen, insbesondere $N_2$ und $NH_3$, verwendet werden.

**Claims**

1. Method for applying a thin transparent layer to the surface of optical elements in a vacuum receiving vessel, in particular to the surface of transparent plastic-material elements, as a protection against mechanical and chemical actions, in which the surface is exposed to a monomeric vapour of organic compounds, preferably an organosilicone substance, and the protective layer is deposited by polymerization from the vapour phase by means of the radiation from an electrical gas discharge, substances which increase the layer hardness being added to the monomeric vapour during the growth of the polymer layer, characterized in that the addition of the substances which increase the layer hardness takes place with a delay in relation to the start of the polymerization process.

2. Method according to claim 1, characterized in that, during the polymerization process, the substances which increase the layer hardness are added in increasing quantity.

3. Method according to claim 2, characterized in that the supply of the substances which increase the layer hardness is continuously increased.

4. Method according to claim 1, characterized in that the addition of the substances which increase the layer hardness is started after a specified time from the start of the polymerization in the first half of the layer growth, and the quantity of the substances added is increased by the end of the layer growth to a multiple of the quantity of monomeric vapour.

5. Method according to claim 1, characterized in that oxygen is used as the substance which increases the layer hardness.

6. Method according to claim 5, characterized in that the oxygen partial pressure is continuously raised during 5 to 20% of the total period of deposition and that, at a working pressure of 5 x $10^{-2}$ mbar to 1 mbar, the flow rate ratio of oxygen and monomer is increased to values between 3:1 and 20:1, in particular between 8:1 and 16:1.

7. Method according to claim 5, characterized in that the addition of oxygen is started after a maximum of 10% of the total period of deposition and is increased within a maximum of 30% of the total period of deposition in a linearly rising manner to a specified value which remains constant over the remaining period of deposition.

8. Method according to claim 1, characterized in that hydrocarbons (low molecular alkanes, alkenes or alkynes), in particular methane and acetylene, are used as the substance which increases the layer hardness.

9. Method according to claim 1, characterized in that nitrogen or nitrogen-containing compounds, in particular $N_2$ and $NH_3$, are used as the substance which increases the layer hardness.


**Revendications**

1. Procédé pour déposer dans un récipient sous vide, une couche mince transparente sur la surface d'élémente optiques, notamment sur la surface d'éléments transparente en matière plastique, pour les protéger contre les atteintes mécaniques et chimiques, procédé dans lequel la surface est exposée à une vapeur monomère de combinaisons organiques, de préférence d'une substance silico-organique, et dans lequel la couche de protection est déposée par polymérisation à partir de la phase gazeuse à l'aide du rayonnement en provenance d'une décharge électrique dans les gaz, des substances augmentant la dureté de la couche étant ajoutées à cette vapeur monomère pendant la croissance de la couche polymérisée, procédé caractérisé en ce que l'addition des substances augmentant la dureté de la couche, s'effectue avec retard par rapport au début du processus de polymérisation,

2. Procédé selon la revendication 1, caractérisé en ce que pendant le processus de polymérisation, les substances augmentant la dureté de la couche, sont ajoutées en quantités croissantes.

3. Procédé selon la revendication 2, caractérisé en ce que, l'alimentation en substances augmentant la dureté de la couche, est continuellement augmentée.

4. Procédé selon la revendication 1 caractérisé en ce que l'addition des substances augmentant la dureté de la couche est mise en oeuvre après un temps prédéfini à partir du début de la polymérisation, dans la première moitié de la croissance de la couche, et la quantité des substances ainsi ajoutées est augmentés jusqu'à la fin de la croissance de la couche à un multiple de la quantité de vapeur monomères.

5. Procédé selon la revendication 1, caractérisé en ce que, en tant que substance augmentant la dureté de la couche, on utilise de l'oxygène.

6. Procédé selon la revendication 5, caractérisé en ce que la pression partielle d'oxygène est constamment augmentés pendant 5 à 20 % de la durée totale de dépôt, tandis que pour une pression opératoire de $5 \times 10^{-2}$ mbar, à 1 mbar, le rapport des débits de l'oxygène et du monomère, est augmenté à des valeurs comprises entre 3 : 1 et 20 : 1, notamment entre 8 : 1 et 16 : 1.

7. Procédé selon la revendication 5, caractérisé en ce que l'addition d'oxygène est mise en oeuvre après 10 % au maximum de la durée totale de dépôt, et est augmentée pendant 30 % au maximum de la durée totale de dépôt, en progression linéaire, à une valeur prédéfinie qui reste constante sur le reste de la durée de dépôt.

8. Procédé selon la revendication 1, caractérisé en ce que, en tant que substance augmentant la dureté de la couche, on utilise des hydrocarbures (des alkanes, des alkènes ou des alkines de bas poids moléculaire), notamment du méthane et de l'acéthylène.

9. Procédé selon la revendication 1, caractérisé en ce que, en tant que substance augmentant la dureté de la couche, on utilise de l'azote ou bien des combinaisons contenant de l'azote, notamment $N_2$ et $NH_3$.

# FIG. 1

FIG.2

HMDS in Ar-Plasma

FIG. 3

HMDS in O₂-Plasma

3

**FIG.4**

Transmission [%]
SiO
Si₂O₃
SiO₂
HMDS in O₂-Plasma
Wellenzahl [cm⁻¹]

**FIG.5**

Streulichtzunahme [%]
ECE-Grenzwert (4 %) für 50 Doppelhübe
Verhältnis der Gadurchflüsse O₂/HMDS